# EUROPEAN PATENT APPLICATION

(11) **EP 4 663 458 A1**
(43) Date of publication of application: **17.12.2025**
(21) Application number: 24208698.1
(22) Date of filing: 24.10.2024
(51) Int. Cl.: B60L 3/00, B61L 15/00, H01Q 1/32

(54) **WIRELESS COMMUNICATION SYSTEM FOR ELECTRICALLY POWERED RAILBOUND VEHICLES**

(30) Priority: 13.06.2024 SE 2450649
(71) Applicant: ICOMERA AB, 411 03 Göteborg (SE)
(72) Inventor: KARLSSON, Mats, 660 50 Vålberg (SE); PERSSON, Patrik, 112 38 Stockholm (SE)
(74) Representative: Lind Edlund Kenamets Intellectual Property AB

(57) **Abstract**

The present disclosure relates to a high voltage protection unit for electrically operated rail-bound vehicles, such as trains. The high voltage protection unit comprises a fully closed metal box connected to ground via at least one ground cable having a total cross-sectional dimension of at least 80 mm², and further, arranged in the fully closed metal box: an isolation transformer having at least 36 kV isolation and an operational frequency of at least 1 kHz; and an internal fiber switch connected to an optical fiber leading to an external fiber switch. The power output from the isolation transformer supplies power to the internal fiber switch and at least one satellite antenna arranged on the roof, and a data cable connects the internal fiber switch and the at least one satellite antenna.

## Description

### TECHNICAL FIELD OF THE INVENTION

The present invention relates to a high voltage protection unit for electrically operated rail-bound vehicles, such as trains, trams, metro, etc. The intention further relates to a satellite communication system for electrically operated rail-bound vehicles comprising such a high voltage protection unit. Particularly, the invention relates to systems comprising communication units, such as antennae, mounted on vehicles running in the vicinity of high-voltage lines or supplies, such as trains.

### BACKGROUND

In order to ensure safety for the inside of a train carriage, all equipment mounted on the roof of a train with connections inside the carriage must be protected from the high voltage power lines above the train track, so that in case a power line falls down on the train, the inside of the carriage is protected. Such high voltage power lines may be used for very high voltage power. In Sweden the current standard is to use 16 kV, but in many other countries 25 kV is used, and it is also known to use even higher voltage levels, such as 50 kV.

A known solution to provide high power protection is by grounding the external equipment to the train roof using metallic conductors, thereby avoiding the current going inside the carriage. Approximate requirements on these conductors are 40 kA during a 125 ms period, thus the dimension are approximately 95 mm² for copper.

However, there is a growing need to provide communication equipment, such as antennas, on external surfaces of vehicles. For example, the present applicant, Icomera, has developed a unique mobile data technology platform that is now commonly used for wireless communication systems for trains and other moving vehicles. In this known system, various communication technologies and links are used, and the system automatically selects among the available channels and uses the most cost-effective combination that fulfils the users' availability, bandwidth and reliability requirements. The users inside the vehicle connect to the wireless network system via their own devices, such as laptops, smartphones, etc through an internal WLAN (Wireless Local Area Network) inside the vehicle.

EP1175757 and EP2943011 by the same applicant describe two methods whereby many of these weaknesses resulting from wireless communication may be overcome through the concurrent use of multiple wireless links. Optimizations can hereby be based on e.g. latency, bandwidth, and other performance parameters, but also on e.g. cost.

However, in order to increase capacity and communication properties it is often desirable, or even necessary, to use satellite communication. In particular, low Earth Orbit (LEO) satellites are now a suitable alternative for communication to and from a moving vehicle.

Low earth orbit (LEO) satellites are satellites operated in LEO, which is an earth-centered orbit with an altitude of 2000 km or less, and typically at 500-1200 km, such as at about 1000 km. Thus, LEO satellites operate at approximately 1/3 of the radius of the earth or lower, and with at least 11.25 periods per day - i.e. with an orbital period of less than 128 minutes. Compared to conventional, geostationary satellites (which are typically at an altitude of 36,000 km), the LEO satellites require much lower energy and cost for satellite placement, and also have much lower latency, due to the relative closeness to the earth. In geostationary satellites, the latency is about 600 ms, whereas LEO satellites typically have a latency of 20-40 ms. On the other hand, LEO satellites have a relatively small momentary field of view, and are only able to observe and communicate with a fraction of the earth at a time. To this end, LEO satellites are operated in networks comprising a multitude of LEO satellites, so called constellations, in order to provide continuous coverage. Currently, several operators, such as SpaceX and OneWeb have operational LEO satellite communication constellations, with a continuous increase in operational LEO satellites in each of them, and several other operators, such as Amazon, Telesat and many others, are on their way of providing operational LEO satellite constellations. The new constellations are, or will be, mega-constellations, each comprising thousands of LEO-satellites. In each constellation, the LEO-satellites communicate with terrestrial base stations, which may in turn be connected to terrestrial communication networks. Further, the LEO-satellites may communicate between satellites, to forward data directly between them.

For communication with satellites, such as LEO-satellites, the vehicle communication system requires an external satellite antenna, mounted e.g. on the train's roof. However, for such satellite antennas, there are a number of things to consider. Satellite antennas often need to be active, and could comprises e.g. the active antenna, sensors, gyro and mechanical steering to control the beam direction, or may alternatively be operated as a phase array antenna. A protective plastic frame, also known as radome, is also normally required, to protect the antenna from shifting weather conditions, wind and sudden pressure changes from entering tunnels etc.

If the standard method for high voltage protection were to be used, i.e. using thick copper wires as a metal cage to encapsulate the antenna's plastic frame or to include the thick copper wires in the plastic frame, the received signal would be compromised severely in terms of e.g. polarization and signal strength. This method could be used but only with very high power on the received satellite signal, something that would restrict the geographical coverage. In case of a phase array antennas (flat antennas) the above-discussed problem is even more serious.

An old attempt to solve this problem was presented by the present applicant in EP 1416583. In this solution, a galvanic separation was provided between a first unit outside the vehicle and a second unit inside the vehicle, but still allowing communication between the units. However, unfortunately this attempt was not entirely successful in meeting the high requirements of high voltage protection for satellite antennas, and has, as far as known to the applicant, not been used in practice.

There is therefore a need for an improved wireless communication system for moving vehicles, with improved high voltage protection, and in particular for wireless communication systems comprising satellite antennas.

### SUMMARY OF THE INVENTION

Thus, in view of the above, there is a need for an improved high voltage protection unit for electrically operated rail-bound vehicles, and in particular for use in wireless communication system for such vehicles, which provides adequate protection and which can be implemented relatively easily and cost-efficiently. There is also a need for a wireless communication system comprising such a high voltage protection unit.

This object is achieved with a high voltage protection unit and a wireless communication system as defined in the appended claims.

According to a first aspect there is provided a high voltage protection unit for electrically operated rail-bound vehicles, the high voltage protection unit comprising a fully closed metal box connected to ground via at least one ground cable having a total cross-sectional dimension of at least 80 mm², and further comprising, arranged in the fully closed metal box:
an isolation transformer having at least 36 kV isolation and an operational frequency of at least 1 kHz, the isolation transformer being directly or indirectly connected to a power source outside said fully closed metal box; and
an internal fiber switch connected to an optical fiber leading to an external fiber switch outside said fully closed metal box;
wherein power output from said isolation transformer is arranged, directly or indirectly, to supply power to said internal fiber switch and, at least one satellite antenna arranged outside said fully closed metal box, and wherein a data cable connects the internal fiber switch and the at least one satellite antenna.

The isolation transformer is a transformer which transfers AC power, preferably in a 1:1 ratio, without galvanic contact, thereby serving as an isolator for DC power. The isolation transformer comprises a primary winding and a secondary winding, arranged around a core of e.g. iron. The AC power is hereby transmitted from the primary winding to the secondary winding.

The isolation transformer here has at least 36 kV isolation and an operational frequency of at least 1 kHz. Preferably, the operational frequency of the isolation transformer is at least 20 kHz, and more preferably at least 50 kHz, and even more preferably at least 80 kHz, and most preferably at least 100 kHz. Due to the very high frequency, the energy transferred over each frequency cycle becomes very limited.

At the same time, the fully closed metal box connected to ground via at least one ground cable having a total cross-sectional dimension of at least 80 mm² is sufficient to handle any power flashover reaching the isolation transformer from the outside, and to ensure that the power does not emerge in any other way than through the ground cable. The total cross-sectional dimension may be obtained by a single ground cable, but may alternatively be obtained by two or more separate ground cables together having a cross-sectional dimension of at least 80 mm². Preferably, the cross-sectional dimension is at least 90 mm², and more preferably at least 100 mm².

It has been found by the present inventors that this provides a very efficient protection, which at the same time could be realized in a compact and cost-efficient solution.

Should a high voltage contact wire, e.g. transferring power at 15 kV, 25 kV or even more, come in contact with the satellite antennas the following will happen:
1. The antennas will most likely break from the mechanical and/or electrical damage.
2. There will likely be a flashover already at the roof from the antenna to the roof trough a ground cable connecting the antenna to the roof, or through the antenna fixture.
3. A high voltage current may also reach the isolation transformer inside the fully closed metal box. However, the high voltage current will not be able to flashover through the isolation transformer due to the isolation. At the same time, there will probably be a flashover to the fully closed metal box, but the grounding to the train body will be sufficient to handle this current. Thus, the power will emerge through the ground cable only.
4. Any transfer of current through the isolation transformer will occur only through induction. The AC with a frequency of at least 1 kHz, and preferably even higher, such as around 100 kHz, greatly limits the amount of energy that can be transferred during one cycle, and the iron core of the isolation transformer will quickly be saturated, possibly already in the first pulse, thereby limiting the amount of energy that can be transferred very significantly, to well below dangerous levels.
5. Further any high voltage pulse that possibly makes its way through the isolation transformer before the iron core is saturated could easily be handled by optional one or more lightning/surge protection units.

Hereby, a very safe, secure and reliable high voltage protection may be achieved. Further, this high voltage protection may be realized in a very compact and cost-efficient manner.

Further, any high voltage passing through the data cable will only reach the internal fiber switch before it is grounded through the ground cable connected to the fully closed metal box. Since no electric current can pass through the optical cable there is no risk of any high power passing out from the fully closed metal box through that cable.

Further, the high voltage protection unit could be realized in a very compact way, and with a relatively light weight. For example, the full closed metal box could have dimensions such as 15 x 15 x 25 cm. Due to its compactness, the high voltage protection unit is easy to place in various positions inside the electrically operated rail-bound vehicle. For example, it becomes possible to place the high voltage protection unit close to the roof, which makes connections to the satellite antennas easier, and which also simplifies connection of the ground cable to e.g. the roof of the vehicle.

It has been found in simulations that the new high voltage protection unit is capable of withstanding 50 kV for at least 5 minutes, and in most embodiments for 10 minutes or more.

In an embodiment, the high voltage protection further comprises, arranged in the fully closed metal box, a DC/AC converter with an input directly or indirectly connected to the power source outside said fully closed metal box, to receive DC power from said power source, and with an output connected to the isolation transformer; and an AC/DC converter with an input connected to the isolation transformer, and an output to, directly or indirectly, supply DC power to said fiber switch and said at least one satellite antenna. This enable feeding of the satellite antenna with DC power from a DC power source onboard the rail-bound vehicle. However, it is also feasible to use a satellite antenna which is operated by AC power, in which case the AC/Dc converter could be omitted, and/or to supply AC to the isolation transformer directly from an AC power source onboard the rail-bound vehicle, in which case the DC/AC converter could be omitted.

The high voltage protection unit may further comprise a satellite antenna power supply arranged within said fully closed metal box, the satellite antenna power supply having an input connected, directly or indirectly, to the isolation transformer, and an output connected to the satellite antenna. The satellite antenna power supply could e.g. be arranged to provide power in a certain format, such as at a certain voltage level, adapted to the specific satellite antenna. For example, if the satellite antenna is a Starlink antenna, the satellite antenna power may be a Starlink DC power supply.

The data cable may e.g. be an Ethernet cable. The internal fiber switch may then further be arranged to provide Power over Ethernet (PoE) over said Ethernet cable. The PoE could be used to power one or more of the satellite antenna(s), but may instead, or in addition, be used to power further equipment arranged on the roof of the rail-bound vehicle, such as a camera.

The high voltage protection unit may further comprise at least one lightning or surge protection unit arranged in the fully closed metal box and connected, directly or indirectly, to the isolation transformer. Such as lightning or surge protection unit may e.g. be realized by a thyristor diode, as is per se known in the art. However, other realizations are also feasible, such as a lightning or surge protection units realized by plasma tubes and the like. The lightning or surge protection unit may, as discussed in the foregoing, take care of any high voltage pulse that possibly makes its way through the isolation transformer before the iron core is saturated, hereby eliminating the risk of any such pulse proceeding out from the fully closed metal box. A first of said at least one lightning or surge protection unit may be arranged between the isolation transformer and the power source arranged outside said fully closed metal box. Additionally, or alternatively, a second of said at least one lightning or surge protection unit may be arranged between the isolation transformer and the internal fiber switch and the at least one satellite antenna.

According to another aspect, there is provided a satellite communication system for electrically operated rail-bound vehicles comprising:
a rail-bound vehicle, such as a train;
a high voltage protection unit as discussed in the foregoing; and
at least one satellite antenna arranged on the roof of the vehicle and connected to said high voltage protection unit.

The at least one satellite antenna is preferably a low Earth Orbit (LEO) satellite antenna. As discussed above, low earth orbit (LEO) satellites are satellites operated in LEO, which is an earth-centered orbit with an altitude of 2000 km or less, and typically at 500-1200 km, such as at about 1000 km. Thus, LEO satellites operate at approximately 1/3 of the radius of the earth or lower, and with at least 11.25 periods per day - i.e. with an orbital period of less than 128 minutes. Compared to conventional, geostationary satellites (which are typically at an altitude of 36,000 km), the LEO satellites require much lower energy and cost for satellite placement, and also have much lower latency, due to the relative closeness to the earth. In geostationary satellites, the latency is about 600 ms, whereas LEO satellites typically have a latency of 20-40 ms. The satellite antennas may e.g. be arranged to communicate with LEO satellites of any one of the presently functional constellations, such as SpaceX and OneWeb, and/or constellations planned by Amazon, Telesat, etc.

The at least one satellite antenna is preferably an actively controlled antenna, and most preferably a phased array antenna.

The satellite antennas are preferably directional satellite antennas, and preferably electronically steered patch array antennas, each antenna enabling a separate communication link. Since the distance to LEO-satellites is much smaller than to geostationary satellites, the antennas can be made very small, lightweight and affordable. For example, the antennas may of the size as a palm. This reduces the overall costs of the system, and also makes it possible to use many antennas on the vehicle. Thus, the vehicle may be provided with at least 2 simultaneously useable directional satellite antennas, and preferably at least 3. In one embodiment, the vehicle may be provided with at least 4 simultaneously useable directional satellite antennas, and preferably at least 5, and most preferably at least 6, such as 6-8 antennas. The antennas may be arranged on the roof of the vehicle, and may be arranged separated over at least the length of the vehicle, to reduce interference.

A protective plastic frame, also known as radome, may further be provided to encase the antenna and protect the antenna from shifting weather conditions, wind and sudden pressure changes from entering tunnels etc. One or more fans may also be provided in, or connected to, the radome, for cooling of the satellite antenna.

The fully closed metal box of the high voltage protection unit is preferably arranged in direct contact with a metal surface of the rail-bound vehicle, and preferably a metal surface at, or in the vicinity of, the roof. Hereby, a metal-to-metal connection may be established between the metal surface of the rail-bound vehicle and one or more sides of the fully closed metal box. The metal-to-metal connection functions as a heat sink, thereby cooling the internal cavity of the fully closed metal box and the components arranged therein. It has been found that this passive cooling is sufficient to lower the temperature inside the fully closed metal box, thereby eliminating the need for additional cooling equipment, such as fans and the like.

Thus, in an embodiment, the high voltage protection unit is passively cooled.

In another embodiment, the high voltage protection unit may be actively cooled, e.g. with an internal fan inside the fully closed metal box. Such an internal fan provides air circulation inside the fully closed metal box, alleviating hot spots and forming a more uniform internal environment. Such an internal fan can be used without any openings or the like through the walls metal box, so that the metal box can still remain fully closed.

All cables connecting the high voltage protection unit and the at least one satellite antenna on the roof of the rail-bound vehicle preferably extends inside metal tubes. Hereby, extra high voltage protection may be obtained, and the cables are also protected against environmental conditions and the like.

In an embodiment the satellite communication system comprises at least two carriages, wherein the system comprises at least two high voltage protection units in accordance with any one of the preceding claims, each of the high voltage protection units being connected to at least one satellite antennas, wherein the high voltage protection units and the corresponding satellite antennas are arranged in different carriages, and preferably with at least one carriage arranged between said different carriages. By the provision of two or more high voltage protection units, connected to different satellite antennas, increased redundancy and capacity is obtained. The high voltage protection units may be connected to a train communication backbone, enabling wireless communication to be distributed over the different satellite antennas, or to user whichever of the satellite antennas for any particular data stream.

In some implementations, the satellite antennas comprise a front antenna and an aft antenna, provided on a front and aft train carriage, respectively, the front and aft carriage preferably being separated by at least one carriage, and preferably at least two carriages and most preferably at least three carriages. Preferably, the aft and fore antennas are separated by at least 25 m, and preferably by at least 50 m, and more preferably at least 100 m, and most preferably at least 200 m.

Since any of the two or more satellites antennas and high voltage protection units can at any time be used for communication, it is possible to communicate with external satellites even if one of the satellites antennas and/or high voltage protection units would become inoperable. Such inoperability could occur due to technical malfunction, but can also be due to bad weather conditions. By separating the satellite antennas over the vehicle, and in particular by the arrangement of the satellite antennas in different carriages, and preferably separated by at least one intermediate carriage, the chance of a clear sky, and good transmission and reception properties, for at least one of the satellite antennas increases.

The provision of several independently operable satellite antennas is also very useful for establishing communication via several simultaneously useable links, which is a great advantage in respect of throughput, reliability, and other transmission properties. The use of several satellite antennas for communication can e.g.be made in the way disclosed in EP 4016873, by the same applicant, said document hereby being incorporated in its entirety by reference.

According to an embodiment, the rail-bound vehicle may comprise at least one router for communication with at least one remote server through at least one external network comprising a plurality of low earth orbit, LEO, satellites. Preferably, the router is arranged to establish connection with the remote server via the LEO satellites over at least two separate communication links. Further, the at least one terrestrial remote server may comprise an aggregation server, and the router may be configured for receiving and transmitting wireless data to and from said aggregation server, using aggregated communication over said at least two separate communication links, the communication thereby at the end points appearing as a single link.

The "router" is a networking router, which is a machine that forwards data packets between networks, on at least one data link in each direction. The router may be a mobile access router, and preferably a mobile access and applications router.

The terrestrial remote server(s) may be any server or site accessible through an exterior mobile network, such as a DNS server, an ISP infrastructure gateway, an aggregation gateway, a content provider server of interest to train passengers, or the like. For all common applications of this invention, the remote servers will constitute the Internet, but partly or purely private network applications are also feasible.

In each constellation, the LEO-satellites communicate with terrestrial base stations, which may in turn be connected to terrestrial communication networks. Further, the LEO-satellites may communicate between satellites, to forward data directly between them. In many LEO-satellite networks, such as in the SpaceX and OneWeb networks, communication between the satellites are often made in the Ka-band, whereas communication with user apparatuses are often made in the Ku-band. However, in some LEO-satellite networks, such as in the planned Telesat network, all communication is made in the Ka-band. Naturally, other communication bands are also feasible.

It has been realized that much more efficient communication via LEO-satellites can be accomplished by using two, and preferably even more, simultaneous links. This can be used to distribute different data streams on different links to make better to increase capacity and performance of the communication. It may also be used for aggregated communication, where a data stream is divided into sub-streams, which are forwarded on different links, and then recombined in an aggregation server. Such aggregated communication also increases the overall capacity and performance, and also provides greatly improved reliability.

By the simultaneous use of multiple links, a much higher capacity is obtained compared to when only single links are used. The redundancy and reliability of the system is also improved, since the communication system will still be working even if a LEO-satellite is malfunctioning, if an operator is temporarily out of operation, and the like. The coverage is also greatly improved.

By the simultaneous use of multiple links, the communication may be controlled based on the varying characteristics of the links, such as packet loss (intermittent failure for packets of data to arrive), latency (round-trip response time, hence responsiveness), throughput (overall rate of data transmission, whether current or potential) and a variety of radiophysical metrics, such as signal strength. Said characteristics may be measured by the router, in order to distribute the data on the available links in an optimized way.

The use of multiple links also alleviates the problems occurring at handovers between the satellites, since the router in the rail-bound vehicle will already be connected to at least one additional link during every handover.

The network formed by the rail-bound vehicle, the multiple and simultaneously useable LEO-satellites, and the terrestrial remote server, may be seen as a mesh network, where nodes non-hierarchically connect to many other nodes.

The router may be arranged to simultaneously communicate with LEO satellites via at least two operators, thereby providing separate communication links. By the use of multiple operators, the capacity is increased, and also the coverage, reliability and redundancy.

The router is preferably arranged to simultaneously communicate via at least two different LEO satellites, said at least two LEO satellites preferably being in communication with different terrestrial base stations. These LEO satellites may be operated by different operators. However, additionally or alternatively, the router may be arranged to simultaneously communicate via at least two different LEO satellites operated by the same operator. Such use of multiple satellites from the same operator will also increase capacity and redundancy, and will also further alleviate the problems related to handovers. It will also reduce the boresight problems often experienced when communication is made only through a single link.

In exemplary set-ups, there may be in total four antennas, for communication with two different operators, each on two different links, a 2x2 set-up, or there may be in total six antennas, communicating with three different operators, each on two different links, a 3x2 set-up, or communicating with two different operators, each on three different links, a 2x3 set-up. However, other alternatives are also feasible, such as 3x3, 2x4, 4x2, 4x3, 3x4, 2x1, 1x2 and the like.

One or more modem may be arranged to establish communication with each operator. Further, a modem may be connected to only one antenna, or be connected to two or more antennas. Thus, each communication link may be established over only one antenna, or over two or more antennas. Further, antennas may also be shared among several modems.

The router is preferably connected to an internal network on-board the rail-bound vehicle, for connection to on-board client devices, and preferably a wireless internal network, and most preferably a wireless internal network operated in accordance with an IEEE 802.11 standard, such as WiFi. To this end, one or more access points may be provided inside the train, and be connected to the router via a wire, such as an ethernet cable, or through a wireless connection.

The router may be configured for receiving and transmitting wireless data to and from both said aggregation server, using aggregated communication over at least two separate links, and at least one other stationary communication server, using non-aggregated communication over a single link, and the router further being accessible by a plurality of client devices onboard said vehicle. Further, the system may comprise a controller within or connected to said router, said controller including at least one selection rule for selecting whether to use aggregated or non-aggregated communication, the controller being configured to determine, upon a request from a client device to communicate with one of said remote servers, whether one of said at least one rules applies, and to select using aggregated communication via said aggregation server or non-aggregated communication via said at least one other communication server for communication based on said determination.

Thus, it is possible to select which network traffic that is to be aggregated in the process of routing said traffic between the vehicle and remote servers. It is determined, upon a request from a client device to access a resource on a remote server, whether that request should use aggregation. When aggregation should be used, routing of the request occurs through a specific stationary server - the aggregation server - whereas where aggregation should not be used, an "ordinary" wireless link is selected. Hereby, such non-aggregated traffic is conveyed more directly to its target server by routing it over the single link selected for this purpose.

This is based on the realization that most data streams are very short, whereas some data streams, such as voice over IP (VoIP) streams are long. Aggregation provides great advantages in respect of maintaining streams over a long period of time. The need for aggregation and ensuring that the streams are maintained are of great importance for such long streams, whereas this is of less need for shorter streams. For example, downloading an ordinary web page is typically made by downloading a plurality of separate streams. Should one of these streams fail, re-sending of that stream would be easily handled. However, should a VoIP stream be disrupted, the call would be aborted. Thus, by using aggregation for only certain streams, the overall performance of the communication system is greatly improved. Further, by using the aggregated communication only for certain streams, being in best need of the this performance, the capacity of this communication route is better used, and saved for the streams where it is of the best advantage.

Aggregation means that multiple wireless links are aggregated for simultaneous use by means of routing traffic on said links through a shared virtual connection to and from the gateway, which is a stationary computer acting as a server - an aggregation server - on the Internet. This method, hereinafter referred to as "aggregation", greatly improves the reliability of high-bandwidth wireless communication for the vehicles.

However, routing all traffic from the vehicle to a gateway may put a strain on the aggregation server, and in order to reduce this, at least some of the communication may be sent to other servers without aggregation. This maintains all the benefits and advantages of the aggregated communication, but in addition solves the bottleneck problem. Thus, great advantages are achieved in respect of enhanced bandwidth and other communication properties, lowered costs, and increased robustness.

Aggregation is the state and process whereby data streams between on-board clients and external stationary servers are jointly managed, preferably by a special protocol, between the router and the aggregation gateway/aggregation server. In reality, aggregated traffic passes through ISP infrastructure servers on its way to and from the aggregation gateway, but the virtual connection makes it appear to a third party, such as a web site, that all communications are taking place between that site and the aggregation gateway. This is advantageous because the aggregation gateway has a single, stable IP address and because streams of data can be moved from one physical link to another with minimal disruption, since the various links can be monitored both from the router and from the gateway.

When an aggregation gateway is available, data streams will be selected for aggregation based primarily on the differing benefits of aggregating different types of traffic. The present invention is based on the realization that these needs for different types of traffic varies greatly, and by treating such traffic differently, great savings and much increased performance can be obtained. For example, an individual HTTP request made from a client browsing the web is likely to be brief, and one client's HTTP-based interaction with one web site is likely, but not guaranteed, to be unaffected by changes in the client's apparent public address from one individual request to another. Furthermore, HTTP traffic constitutes a large portion of passenger traffic. Therefore, excluding all HTTP requests from aggregation saves a relatively large amount of gateway load, while generally costing little in perceived performance. At the other end of the spectrum, a VPN connection is likely to be lengthy and sensitive to perturbations, such as changes in apparent IP address due to periods of poor coverage on one link or another. VPN connection data streams would therefore be among the last types of streams to be excluded from aggregation. They can be said to have a high need for aggregation, by virtue of the relative benefits they derive from aggregation.

The selection rule may comprise determining whether the requested resource involves a HTTP communication, and if so to assign non-aggregated communication for this communication. Additionally or alternatively, the at least one selection rule may comprise determining whether the requested resource involves a TCP communication a destination port of 80, and if so to assign non-aggregated communication for this communication. Additionally or alternatively, the at least one selection rule may comprise determining whether the requested resource involves a VPN communication, and is so to assign an aggregated communication for this communication.

Further, the selection rule may comprise determining the data stream type related to the requested resource, and assigning aggregated communication to data stream types of predetermined data stream types. The predetermined data stream types are preferably at least one of voice-over-IP (VOIP) and VPN. The data stream type may e.g. be determined based on deep packet inspection.

In some implementations, the system further comprises one or more auxiliary antenna provided on the moving vehicle, in addition to the satellite antenna(s), the auxiliary antenna(s) being connected to the router, wherein the router is further arranged to establish a connection with e.g. a remote server over one or more auxiliary communication link(s) via the auxiliary antenna(s). The auxiliary communication link(s) may e.g. be defined between the auxiliary antenna and terrestrial base stations.

### BRIEF DESCRIPTION OF THE DRAWINGS

For exemplifying purposes, the invention will be described in closer detail in the following with reference to embodiments thereof illustrated in the attached drawings, wherein:
Fig 1 is a schematic illustration of a wireless satellite communication system in accordance with an embodiment;
Fig 2 is a more detailed block diagram of the wireless communication system of Fig 1;
Fig. 3 is a schematic top view of a rail-bound vehicle, here a train, in the wireless satellite communication system in Figs. 1 and 2;
Fig. 4a is a schematic illustration of a wireless satellite communication system in accordance with another embodiment, and Fig. 4b is a more detailed enlargement of a part of Fig. 4a;
Fig. 5 is a schematic illustration of a high voltage protection unit in accordance with a first embodiment, useable e.g. in the wireless communication systems of Figs. 1 - 4b;
Fig. 6 is a schematic illustration of a high voltage protection unit in accordance with another embodiment, useable e.g. in the wireless communication systems of Figs. 1 - 4b; and
Fig. 7 is a schematic illustration of a high voltage protection unit in accordance with yet another embodiment, useable e.g. in the wireless communication systems of Figs. 1 - 4b.

### DETAILED DESCRIPTION OF CURRENTLY PREFERRED EMBODIMENTS

In the following detailed description, preferred embodiments of the present invention will be described. However, it is to be understood that features of the different embodiments are exchangeable between the embodiments and may be combined in different ways, unless anything else is specifically indicated. Even though in the following description, numerous specific details are set forth to provide a more thorough understanding of the present invention, it will be apparent to one skilled in the art that the present invention may be practiced without these specific details. In other instances, well known constructions or functions are not described in detail, so as not to obscure the present invention. In the following examples, an embodiment related to a train is provided. However, it is to be acknowledged by the skilled reader that the method and system are correspondingly useable on other rail-bound moving vehicles, such as subway vehicles, trams, etc.

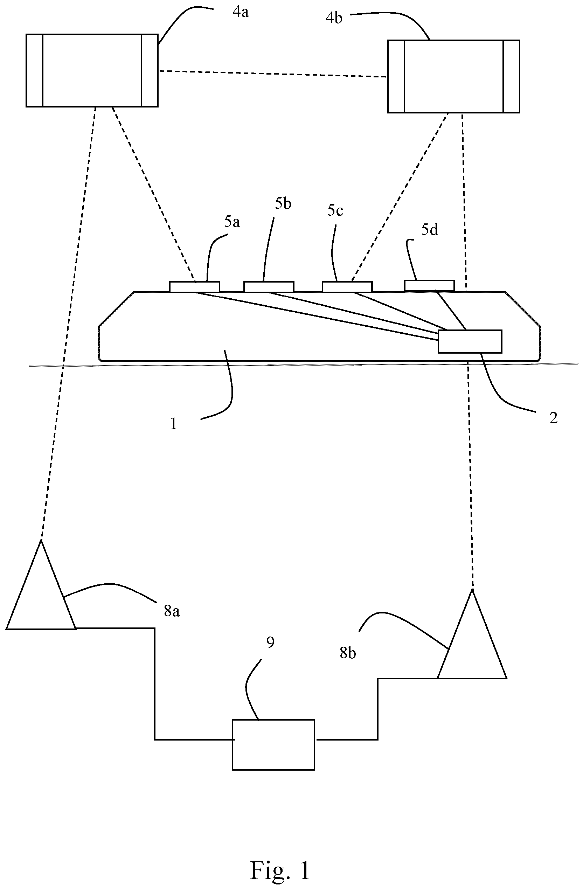

In Fig. 1, a schematic illustration of a wireless satellite communication system is illustrated. The system comprises a router 2, arranged in a rail-bound vehicle, here a train 1. In the illustrative embodiment, a single router is provided, but more than one router may also be provided.

The router in the train may be arranged to communicate with at least one terrestrial remote server 9 through at least one external network comprising a plurality of low earth orbit, LEO, satellites 4a, 4b. In an embodiment, the router is arranged to establish connection with the remote server 9 via the LEO satellites 4a, 4b over at least two simultaneously useable, separate communication links.

The LEO satellites may communicate between each other, and also communicates with terrestrial base stations 8a, 8b, connected to terrestrial networks, in turn connected to the remote server 9.

The communication through the LEO satellites may occur over several communication links simultaneously, and e.g. by aggregated communication. To this end, at least one of the terrestrial remote servers may comprise an aggregation server, and the router is configured for receiving and transmitting wireless data to and from said aggregation server, using aggregated communication over said at least two separate communication links, the communication thereby at the end points appearing as a single link.

The network formed by the train, the multiple and simultaneously useable LEO-satellites, and the terrestrial remote server, may form a mesh network, where nodes non-hierarchically connect to many other nodes.

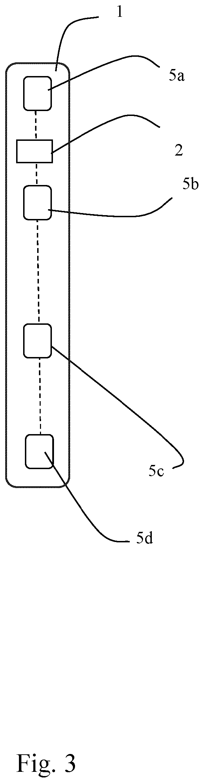

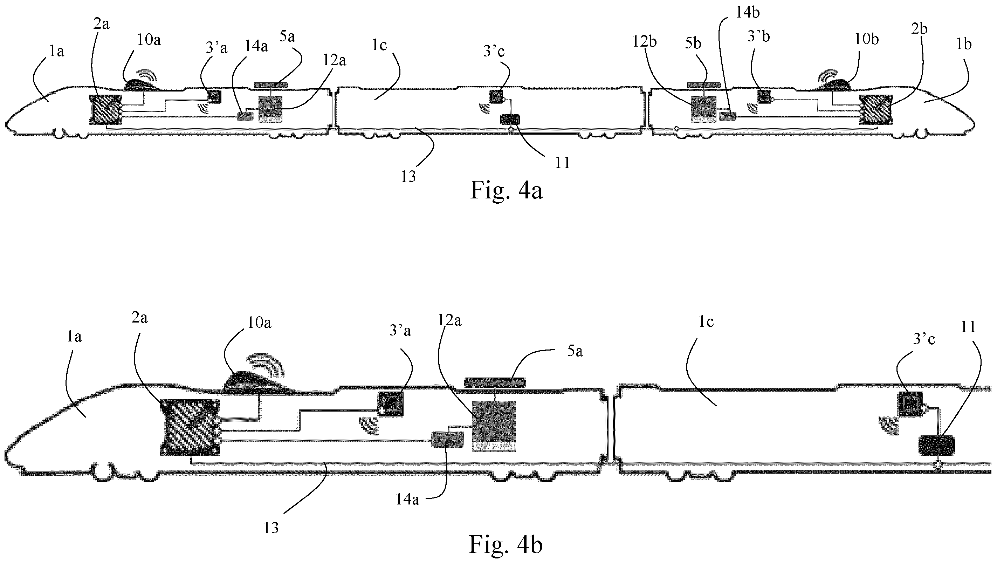

The train is preferably provided with a plurality of simultaneously useable directional satellite antennas 5a-d, and preferably electronically steered patch array antennas, each antenna enabling a separate communication link. In the illustrative example of Fig. 1, 4 simultaneously useable directional satellite antennas are provided, but fewer or more antennas may be used, such as at least 5, or at least 6. The antennas may be arranged on the roof of the train and may be arranged separated over at least the length of the train, to reduce interference. This is further illustrated in Fig. 3.

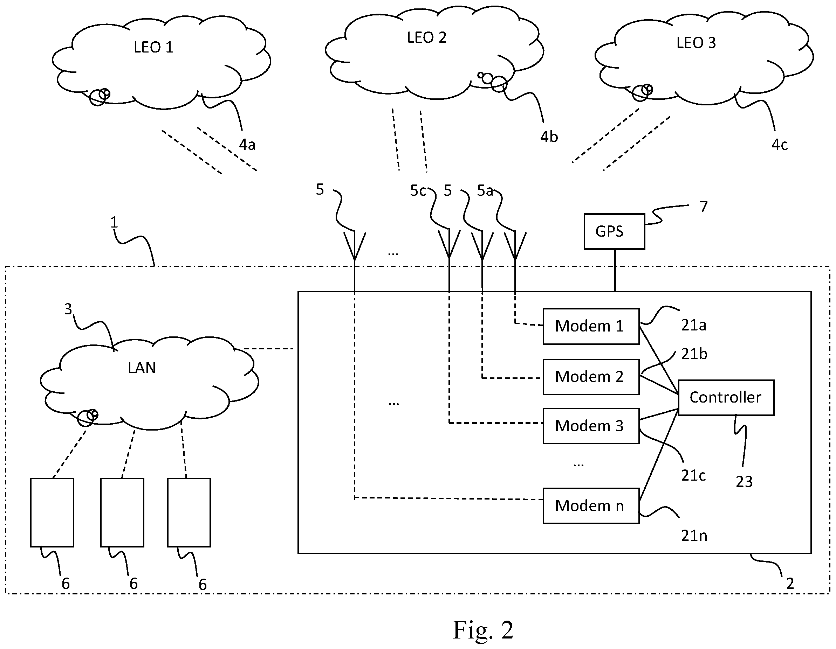

In Fig. 2 a schematic illustration of a train 1 having a communication system is provided. The communication system comprises a data communication router 2 for receiving and transmitting data between an internal local area network (LAN) 3, and one or several LEO satellites 4a, 4b, 4c. Communication to and from the LEO satellites is provided through one or several antennas 5 a-n on the train roof. Two or more data links are available between the train and the LEO satellites.

The LAN is preferably a wireless network, using one or several internal antennas, or access points, to communicate with terminal units 6 within the train. It is also possible to use a wired network within the train. The LAN may be set-up as wireless access point(s), e.g. using an IEEE 802.11 standard (WiFi). The client(s) 6 may be computing devices such as laptops, mobile telephones, smart phones, PDAs and so on.

The data communication router comprises a plurality of modems 21 a-n. Assignment of data streams to different LEO satellites is controlled by a controller 23. The controller is preferably realized as a software controlled processor. However, the controller may alternatively be realized wholly or partly in hardware.

The system may also comprise a global positioning system (GPS) receiver 7 for receiving GPS signals indicative of the current position of the train, and wherein the controller may be arranged to assign data streams to various data links also partly in dependence on said received GPS signals.

The communication may use aggregated communication and/or non-aggregated communication.

With reference to Figs. 4ab, the communication system may further comprise one or more auxiliary antenna(s) 10a, 10b connected to the router 2 to enable communication with the external network via an auxiliary communication link. For instance, the auxiliary communication link is established between the auxiliary antenna and a terrestrial base station of an external network. Hereby, one or more additional communication link(s) is/are provided, through which data can be routed to/from the remote server. For instance, the auxiliary communication link is a WiFi (in accordance with an IEEE 802.11 standard), GSM, 3G, LTE, or 5G communication link. The auxiliary antenna may be an omnidirectional antenna or a directional antenna which is placed on an arbitrary position along the train 1.

In the illustrative example of Figs. 4a-b, the wireless communication system comprises a router 2a provided in a first carriage 1a. The router 2a is connected to an auxiliary antenna 10a. This antenna 10a is preferably a directional antenna, pointing in the forward direction of the train. The router is further connected to an access point 3'a, arranged to provide internal wireless LAN access within the carriage 1a. The connection between the router 2a and the auxiliary antenna 10a and to the internal access point 3'a may e.g. be in the form of an Ethernet cable. The router 2a is further connected to a fiber switch 14a, also possibly through an Ethernet cable. The fiber switch 14a is connected to, or form a part of, a high voltage protection unit (HVPU) 12a, as will be discussed in more detail in the following. The HVPU is connected to a satellite antenna 5a on the roof of the carriage 1a.

The carriage 1a may be the forwardmost carriage in the train. A second carriage 1b, which may be the last carriage in the train, may have a similar or identical setup of the wireless communication system as in the first carriage 1a. Thus, the second carriage 1b may comprise a second router 2b, connected to an auxiliary antenna 10b, to an internal access point 3'b and to a fiber switch 14b. The fiber switch 14b is connected to, or forms a part of, a second HVPU 12b, which is connected to a second satellite antenna 5b.

The routers 2a and 2b may be connected by a digital backbone 13, such as an optical fiber, an Ethernet cable, or the like.

In the illustrative embodiment two routers 2a, 2b are provided. However, a single router may also be used. Further, in case more antennas are used, there may also be more than two routers. The routers may form a peer-to-peer network, but alternatively, a master-slave configuration is also feasible.

Further, more than satellite antenna may be connected to a single HVPU. Further, a single HVPU may be provided instead of two, and more than two HVPUs may also be used.

In the illustrative example, an intermediate carriage 1c is arranged between the first, forwardmost carriage 1a and the second, rear carriage 1c. In this embodiment, this carriage is provided with an internal access point 3'c, which may be connected to the digital backbone 13 through a switch 11. The switch 11 may e.g. be a Power over Ethernet (PoE) switch. However, alternatively the carriage 1c may also be provided with a router, and have a similar setup as in the other two carriages.

Each satellite antenna 5 is connected to a high voltage protection unit (HVPU). Preferably, each HVPU 12 is connected to only one satellite antenna 5. However, a HVPU 12 may also be connected to more than one satellite antenna 5. Embodiments of the HVPU will be discussed in more detail in the following.

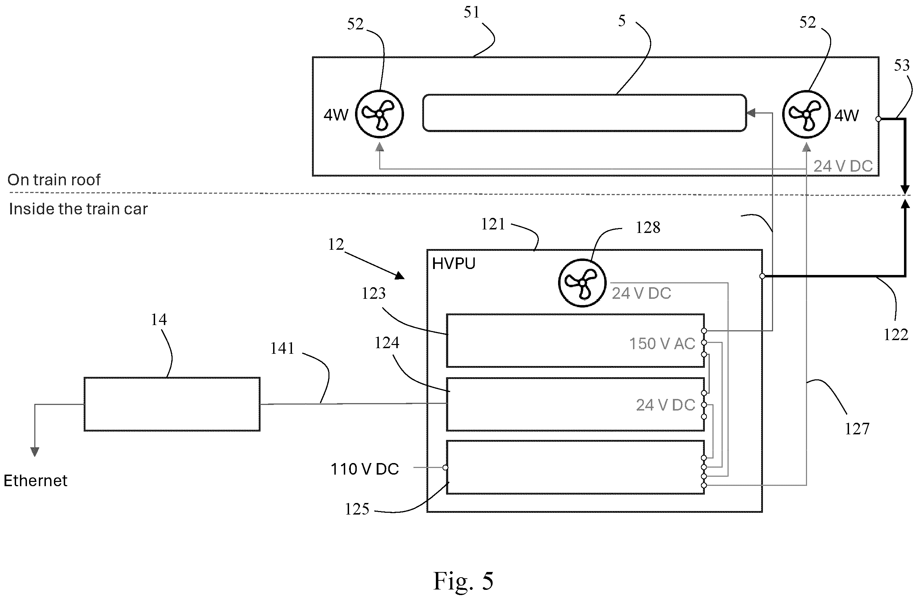

In a first embodiment, illustrated in Fig. 5, the HVPU 12 comprises a fully closed metal box 121, e.g. made by aluminum. However, other metals may also be used. The fully closed metal box 121 is connected to ground, such as a metal roof or sidewall of the train, via a ground cable 122. The ground cable is very thick, and preferably being capable of transferring at least 40 kA during a 125 ms period. Preferably, the ground cable is made of copper and has a cross-sectional dimension of at least 80 mm², and preferably at least 100 mm². The cross-sectional dimension could be obtained by a single ground cable or as an aggregation of several ground cables.

The HVPU 12 further comprises, arranged in the box 121, an isolation transformer 125 having at least 36 kV isolation, and preferably at least 50 kV isolation, and an operational frequency of at least 1 kHz. Preferably, the operational frequency of the isolation transformer is at least 50 kHz, and preferably at least 80 kHz, and most preferably at least 100 kHz. Due to the very high frequency, the energy transferred over each frequency cycle becomes very limited.

The isolation transformer 125 is preferably realized as a 1-to-1 power converter, providing galvanic separation that stops DC current, but with a capacitive coupling allowing transfer of AC current. The isolation transformer may e.g. comprise a primary and secondary winding, arranged around a magnetic core. Due to the very high operational frequency used in the HVPU, the magnetic core can here be made relatively small.

The isolation transformer 125 is directly or indirectly connected to a power source outside the fully closed metal box 121. For example, the isolation transformer may be directly or indirectly connected to a DC source, e.g. in the range of 63-154 V, such as 110 V DC. The isolation transformer 125 may alternatively be referred to as an internal power supply with at least 36 or 50 kV isolation.

The HVPU 12 further comprises, arranged in the box 121, an internal fiber switch 124. The internal fiber switch 124 is connected to the fiber switch 14 through an optical fiber 141, which is non-conductive and thereby provides a galvanic separation between the internal fiber switch 124 and the fiber switch 14. The internal fiber switch 124 may be powered by the isolation transformer. In an embodiment, the isolation transformer provides a DC outlet of 24 V for powering of the internal fiber switch.

The HVPU 12 may further comprise, arranged in the box 121, a satellite antenna box or satellite antenna power supply 123. The satellite antenna power supply 123 may be powered by the isolation transformer 125. For example, the isolation transformer 125 may power the satellite antenna power supply 123 by 150 V AC. The satellite antenna power supply 123 is in turn arranged to provide power to the satellite antenna 5. The satellite antenna power supply could e.g. be arranged to provide power in a certain format, such as at a certain voltage level, adapted to the specific satellite antenna. The satellite antenna power supply may also power the satellite antenna 5 through a cable also useable for data communication, e.g. by Power over Ethernet. For example, if the satellite antenna is a Starlink antenna, the satellite antenna power supply may be a Starlink DC power supply. Data may be communicated between the satellite antenna power supply 123 and the internal fiber switch 124 through a wired connection, such as an Ethernet cable. Data between the satellite antenna 5 and the satellite antenna power supply 123 may, as discussed above, be provided through the power cable, or alternatively through a separate wired connection, such as through a separate Ethernet cable.

A protective frame, also referred to as radome 51, may be provided to encase and protect the satellite antenna. The antenna and/or the radome may further be connected to ground, such as the metallic train roof, through a ground cable 53. This ground cable may have the same dimensions and properties as the above-discussed internal ground cable 122, connecting the fully closed metal box 121 to ground.

All cables connecting the high voltage protection unit and the at least one satellite antenna on the roof of the rail-bound vehicle preferably extends inside metal tubes. Hereby, extra high voltage protection may be obtained, and the cables are also protected against environmental conditions and the like.

In order to provide cooling of the satellite antenna 5, fans 52 or the like may be provided inside, or connected to, the radome 51. The fans 52 may be powered through the satellite antenna power supply 123. However, preferably, the fans 52 are powered directly by the isolation transformer 125. The fans may e.g. be powered by 24 V DC.

Similarly, output power from the isolation transformer 125, e.g. 24 V DC, may also be used to power auxiliary equipment on the train roof, such as a camera, etc.

The fully closed metal box 121 of the high voltage protection unit 12 is preferably arranged in direct contact with a metal surface of the rail-bound vehicle, and preferably a metal surface at, or in the vicinity of, the roof. Hereby, a metal-to-metal connection may be established between the metal surface of the rail-bound vehicle and one or more sides of the fully closed metal box 121. The metal-to-metal connection functions as a heat sink, thereby cooling the internal cavity of the fully closed metal box and the components arranged therein.

In addition to this passive cooling, the high voltage protection unit 12 may be actively cooled, e.g. with an internal fan 128 inside the fully closed metal box. Such an internal fan 128 provides air circulation inside the fully closed metal box 121, alleviating hot spots and forming a more uniform internal environment. Such an internal fan 128 can be used without any openings or the like through the walls metal box, so that the metal box can still remain fully closed. The fan 128 may be powered by the isolation transformer 125, e.g. with the same 24 V DC supplied to the internal fiber switch.

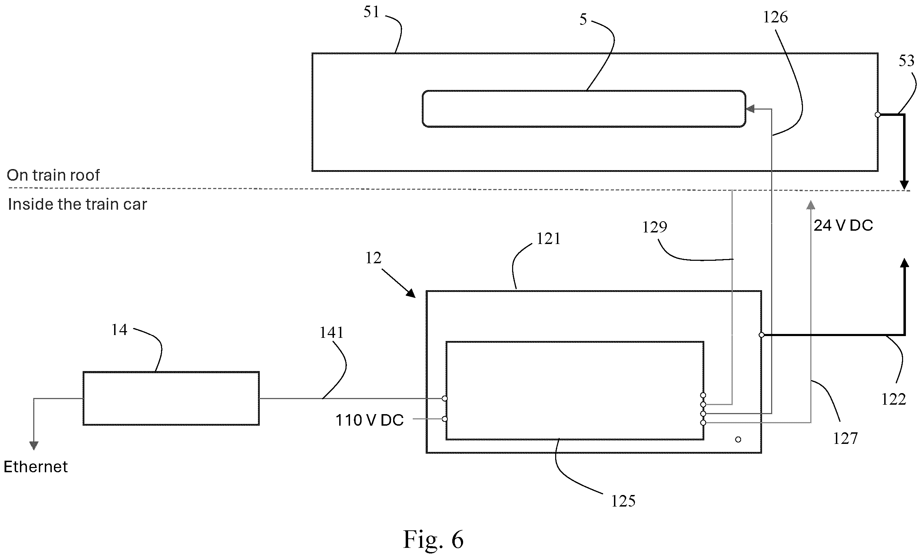

The embodiment illustrated in Fig. 6 is similar to the above-discussed embodiment of Fig. 5. However, here the fully closed metal box 121 is passively cooled through the above-discussed metal-to-metal contact between a wall of the fully closed metal box 121 and the train roof, or other metal surface of the train, thereby eliminating the need for additional cooling equipment, such as fans and the like.

Further, in the embodiment of Fig. 6, a single unit 125 is provided inside the fully closed metal box 121, the single unit 125 integrating an isolation transformer, providing at least kV isolation, a fiber switch, a PoE output, for powering of the satellite antenna, and a power output for powering of other equipment, such as fans, cameras, and the like.

Here, the single unit 125 is on the one hand connected to a power inlet, such as 110 VDC, and the optical cable 141, and on the other hand connected to the satellite antenna 5 through a data and power cable. The satellite antenna may be powered by PoE. However, alternatively, data and power may be separated, and provided through separate cables. Further, a separate power line 127 may be provided to the radome 51 for powering of cooling equipment or the like. A separate power line 129 may further be provided for auxiliary equipment, such as cameras.

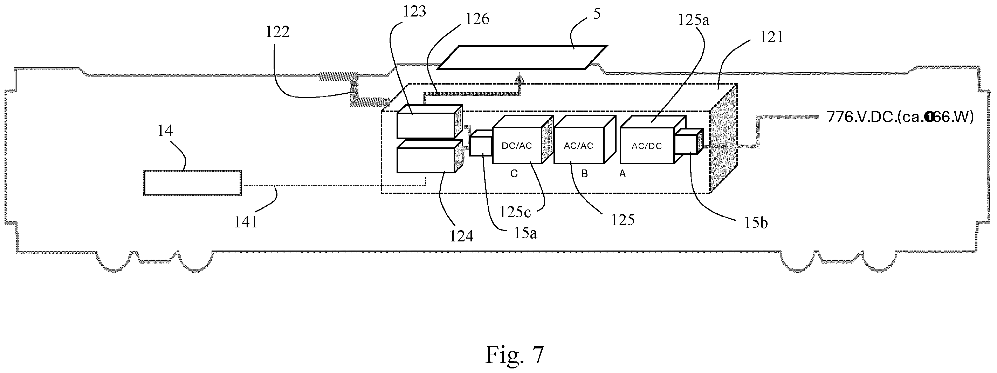

In the embodiment of Fig. 7, the HVPU is realized in a similar way as discussed in the other embodiments. Here, however, a more detailed, distributed embodiment of the isolation transformer is provided. In this embodiment, the isolation transformer 125 is arranged in the fully closed metal box 121, together with a DC/AC converter 125a with an input directly or indirectly connected to the power source outside said fully closed metal box, to receive DC power, such as 110 V DC from said power source. An output of the DC/AC converter is connected to the isolation transformer 125, e.g. realized as a 1:1 AC/AC transformer. The isolation transformer 125 is, at the other side, connected to an AC/DC converter 125c. The AC/DC converter 125c may be directly, or indirectly, connected to supply DC power to the fiber switch 124 and at least one satellite antenna 5, possibly via a satellite antenna power supply 123. This enables feeding of the satellite antenna with DC power from a DC power source onboard the rail-bound vehicle. However, it is also feasible to use a satellite antenna which is operated by AC power, in which case the AC/DC converter 125c could be omitted, and/or to supply AC to the isolation transformer 125 directly from an AC power source onboard the rail-bound vehicle, in which case the DC/AC 125a converter could be omitted.

The high voltage protection unit may further comprise at least one lightning or surge protection unit 15a, 15b arranged in the fully closed metal box 121 and connected, directly or indirectly, to the isolation transformer 125. Such as lightning or surge protection unit may e.g. be realized by a thyristor diode, as is per se known in the art. However, other realizations are also feasible, such as a lightning or surge protection units realized by plasma tubes and the like. In an embodiment, a first lightning or surge protection unit 15b may be arranged between the isolation transformer 125 and the power source arranged outside said fully closed metal box 121. Additionally, or alternatively, a second lightning or surge protection unit 15a may be arranged between the isolation transformer 125 and the internal fiber switch 124, the satellite antenna power supply 123, and/or the at least one satellite antenna 5.

Should a high voltage contact wire, e.g. transferring power at 15 kV, 25 kV or even more, come in contact with the satellite antennas the following will happen:
1. The satellite antennas 5 will most likely break from the mechanical and/or electrical damage.
2. There will likely be a flashover already at the roof from the antenna to the roof trough a ground cable connecting the antenna to the roof, or through the antenna fixture.
3. A high voltage current may reach the isolation transformer 125 inside the fully closed metal box 121. However, the high voltage current will not be able to flashover through the isolation transformer 125, due to the isolation. At the same time, there will probably be a flashover to the fully closed metal box 121, but the grounding through the ground cable 122 to the train body will be sufficient to handle this current. Thus, the power will emerge through the ground cable 122 only.
4. Any transfer of current through the isolation transformer will occur only through induction. The AC with a frequency of at least 1 kHz, and preferably even higher, such as around 100 kHz, greatly limits the amount of energy that can be transferred during one cycle, and the iron core of the isolation transformer will quickly be saturated, possibly already in the first pulse, thereby limiting the amount of energy that can be transferred very significantly, to well below dangerous levels.
5. Further any high voltage pulse that possibly makes its way through the isolation transformer 125 before the iron core is saturated could easily be handled by optional one or more lightning/surge protection units.

Further, any high voltage passing through the data cable will only reach the internal fiber switch before it is grounded through the ground cable connected to the fully closed metal box. Since no electric current can pass through the optical cable there is no risk of any high power passing out from the fully closed metal box through that cable.

The invention has now been described with reference to specific embodiments. However, several variations of the communication system are feasible. For example, various components inside the fully closed metal box may, as indicated above, be arranged totally separated, or be integrated in various ways. Further, AC/DC converters and DC/AC converters may be used or omitted, depending on the format of the input and output power. Still further, the antenna may be powered directly from the isolation transformer, or by a separate or integrated satellite antenna power supply. Further, more than one satellite antenna may be used, connected to the same HVPU or to separate, different HVPUs. Further, the wireless communication system may, in addition to satellite communication, also provide communication through other channels, such as by direct contact with base stations on the ground. Such and other obvious modifications must be considered to be within the scope of the present invention, as it is defined by the appended claims. It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting to the claim. The word "comprising" does not exclude the presence of other elements or steps than those listed in the claim. The word "a" or "an" preceding an element does not exclude the presence of a plurality of such elements. Further, a single unit may perform the functions of several means recited in the claims.

## Claims

1. A high voltage protection unit for electrically operated rail-bound vehicles, the high voltage protection unit comprising a fully closed metal box connected to ground via at least one ground cable having a total cross-sectional dimension of at least 80 mm², and further comprising, arranged in the fully closed metal box:
an isolation transformer having at least 36 kV isolation and an operational frequency of at least 1 kHz, the isolation transformer being directly or indirectly connected to a power source outside said fully closed metal box; and
an internal fiber switch connected to an optical fiber leading to an external fiber switch outside said fully closed metal box;
wherein power output from said isolation transformer is arranged, directly or indirectly, to supply power to said internal fiber switch and, at least one satellite antenna arranged outside said fully closed metal box, and wherein a data cable connects the internal fiber switch and the at least one satellite antenna.

2. The high voltage protection unit of claim 1, further comprising, arranged in the fully closed metal box, a DC/AC converter with an input directly or indirectly connected to the power source outside said fully closed metal box, to receive DC power from said power source, and with an output connected to the isolation transformer; and an AC/DC converter with an input connected to the isolation transformer, and an output to, directly or indirectly, supply DC power to said fiber switch and said at least one satellite antenna.

3. The high voltage protection unit of any one of the preceding claims, further comprising a satellite antenna power supply arranged within said fully closed metal box, the satellite antenna power supply having an input connected, directly or indirectly, to the isolation transformer, and an output connected to the satellite antenna.

4. The high voltage protection unit of any one of the preceding claims, wherein the data cable is an Ethernet cable, and wherein the internal fiber switch is arranged to provide Power over Ethernet over said Ethernet cable.

5. The high voltage protection unit of any one of the preceding claims, further comprising at least one lightning or surge protection unit arranged in the fully closed metal box and connected, directly or indirectly, to the isolation transformer.

6. The high voltage protection unit of claim 5, wherein a first of said at least one lightning or surge protection unit is arranged between the isolation transformer and the power source arranged outside said fully closed metal box.

7. The high voltage protection unit of claim 5 or 6, wherein a second of said at least one lightning or surge protection unit is arranged between the isolation transformer and the internal fiber switch and the at least one satellite antenna.

8. The high voltage protection unit of any one of the claims 5-7, wherein the lightning or surge protection unit comprises a thyristor diode.

9. The high voltage protection unit of any one of the preceding claims, wherein the isolation transformer has an operational frequency of at least 20 kHz, and preferably at least 50 kHz, and more preferably at least 80 kHz, and most preferably at least 100 kHz.

10. A satellite communication system for electrically operated rail-bound vehicles comprising:
a rail-bound vehicle, such as a train;
a high voltage protection unit in accordance with any one of the preceding claims; and
at least one satellite antenna arranged on the roof of the vehicle and connected to said high voltage protection unit.

11. The satellite communication system of claim 10, wherein the at least one satellite antenna is a low Earth Orbit (LEO) satellite antenna.

12. The satellite communication system of claim 10 or 11, wherein the at least one satellite antenna is an actively controlled antenna, and preferably a phased array antenna.

13. The satellite communication system of any one of the claims 10-12, wherein the fully closed metal box of the high voltage protection unit is arranged in direct contact with a metal surface of the rail-bound vehicle, and preferably a metal surface at, or in the vicinity of, the roof.

14. The satellite communication system of any one of the claims 10-13, wherein all cables connecting the high voltage protection unit and the at least one satellite antenna on the roof of the rail-bound vehicle extends inside metal tubes.

15. The satellite communication system of any one of the claims 10-14, wherein the system comprises at least two carriages, wherein the system comprises at least two high voltage protection units in accordance with any one of the preceding claims, each of the high voltage protection units being connected to at least one satellite antennas, wherein both the high voltage protection units and the corresponding satellite antennas are arranged in different carriages, and preferably with at least one carriage arranged between said different carriages.
